# EUROPÄISCHE PATENTSCHRIFT

(11) **EP 1 123 483 B1**
(45) Veröffentlichungstag und Bekanntmachung des Hinweises auf die Patenterteilung: **06.10.2004**
(21) Anmeldenummer: 99944369.0
(22) Anmeldetag: 12.08.1999
(51) Int. Cl.: G01B 21/20, G01B 11/24, G01M 17/02

(54) **UNEBENHEITEN IN EINER GEWÖLBTEN OBERFLÄCHE, WIE REIFENSEITENWAND, MIT BANDPASSFILTERUNG**
DETECTION OF IRREGULARITIES IN A CONVEX SURFACE, SUCH AS A TIRE SIDEWALL, USING BAND-PASS FILTERING
DETECTION D'IRREGULARITES DANS UN SURFACE BOMBEE, TELLE QUE LE FLANC D'UN PNEUMATIQUE, PAR FILTRATION PASSE-BANDE

(30) Priorität: 28.10.1998 DE 19849793
(43) Veröffentlichungstag der Anmeldung: 16.08.2001
(73) Patentinhaber: Fraunhofer-Gesellschaft zur Förderung der angewandten Forschung e.V., 80686 München (DE)
(72) Erfinder: KOSTKA, Günther, D-91056 Erlangen (DE); SCHMITT, Peter, D-91058 Erlangen (DE); HASSLER, Ulf, D-91560 Heilsbronn (DE); HANKE, Randolf, D-90766 Fürth (DE)
(74) Vertreter: Schoppe, Fritz, Dipl.-Ing.
(86) Internationale Anmeldenummer: PCT/EP1999/005860
(87) Internationale Veröffentlichungsnummer: WO 2000/025088

(56) Entgegenhaltungen:
- EP-A- 0 328 384
- EP-A- 0 440 418
- EP-A- 0 785 421
- WO-A-98/45664
- US-A- 4 311 044
- US-A- 4 327 580

## Beschreibung

Die vorliegende Erfindung bezieht sich auf die industrielle Qualitätskontrolle und insbesondere auf die industrielle Qualitätskontrolle an Produkten mit schwach strukturierten reliefartigen Oberflächen hinsichtlich der Überprüfung auf Fabrikationsfehler, die sich durch eine spezifische Anomalie der Oberflächenformung abzeichnen.

In der industriellen Qualitätskontrolle tritt häufig die Aufgabe auf, gewölbte Oberflächen bezüglich Fabrikationsfehlern zu untersuchen, wobei die gewölbte Oberfläche neben potentiell vorhandenen Fabrikationsfehlern auch weitere bewußt angebrachte Strukturierungen aufweist. Einer der wichtigsten Anwendungsfälle hierbei ist die Detektion von sogenannten Beulen oder Einschnürungen an Fahrzeugreifenflanken. Die besondere Schwierigkeit bei der Detektion solcher Fehlermerkmale liegt darin, daß auf den zu prüfenden Flächen in der Regel gleichzeitig erhabene reliefartige Schrift- oder Markierungszeichen als gewollte Strukturierung aufgebracht sind, daß Schrift- und Fehlerstruktur im gleichen Höhenintervall liegen bzw. die zu detektierenden Fehler eine geringere Auslenkung als die konstruktiven Strukturen haben können, und daß die zu prüfende Seitenoberfläche zudem eine torusförmige Krümmung aufweist. Dies hat zur Folge, daß eine einfache Schwellwertentscheidung aufgrund von gemessenen Formdaten zu keiner eindeutigen Unterscheidung zwischen Fehler und Schriftrelief führt. Weiterhin sei darauf hingewiesen, daß es eine Vielzahl von Reifenherstellern gibt, von denen jeder eine Vielzahl von Reifentypen anbietet. Jeder Reifentyp kann eine unterschiedliche Abmessung und damit auch eine unterschiedliche Krümmung der Reifenseitenflanke haben. Zudem wird jeder Reifentyp eine andere Aufschrift haben. So ist zwar die Aufschrift des Herstellers üblicherweise von Reifentyp zu Reifentyp ähnlich, die Bezeichnung des Reifentyps selbst und weitere Informationen, die sich auf Reifen finden, variieren jedoch von Typ zu Typ stark. Reifenaufschriften sind üblicherweise derart ausgeführt, daß ein Buchstabe beispielsweise eines Herstellers nicht flächig von der Reifenseitenflanke vorsteht, sondern durch eine im Querschnitt z. B. dreieckförmige Erhebung umrandet sind, wobei sich die Erhebung üblicherweise scharf, d. h. durch eine Kante, von der Reifenoberfläche abhebt. Weiterhin kommen jedoch ebenfalls eher flächige durch Kanten begrenzte Erhebungen vor, die normalerweise jedoch relativ kleine Flächen einnehmen.

Bei der Produktion von Fahrzeugreifen kann es zu Herstellungsfehlern beim inneren Aufbau kommen, die die mechanischen Eigenschaften und dadurch das Stabilitätsverhalten signifikant beeinflussen. Solche Herstellungsfehler beispielsweise des Stahlnetzes, um das der Reifengummi herum angebracht ist, sind nach außen hin durch örtlich begrenzte Beulen oder Einschnürungen sichtbar. Eine Aussonderung solcher Produkte ist notwendig. Diese Aufbaufehler sind besonders an den Seitenflächen möglich und damit der ungestörten torusförmigen Oberfläche des Reifens überlagert. Die laterale und vertikale Ausdehnung solcher Defektstrukturen ist vergleichbar mit der gleichzeitig vorhandenen konstruktiven, d. h. gewollten, Strukturierung auf der Oberfläche in Form eines Schrift- oder Markierungsreliefs.

Bisher wurden für diese Prüfaufgaben im industriellen Bereich vorwiegend kapazitive Meßverfahren eingesetzt, die jedoch lediglich eine unbefriedigende Prüftiefe leisten können. Während der Bewegung der Oberfläche, d. h. während einer Drehung des Reifens, wird über eine Änderung der Kapazität des Meßsensors eine Abstandsänderung zwischen der Meßelektrode und der Reifenoberfläche ermittelt. Der Abstand liegt dabei in der Größenordnung von etwa 1 cm. Der Nachteil dieses Verfahrens liegt in seiner geometrisch bedingten relativ groben lateralen Ortsauflösung, die zur Folge hat, daß nur eine geringe Anzahl von Spuren pro Breite des Prüfbereichs sinnvoll zu vermessen ist. Das Meßsignal enthält keine ausreichende Information über den genauen Verlauf einer Höhenauslenkung. Ferner ist keine Selektion zwischen Schrift- und Fehlerstrukturen möglich, da beide Strukturen im gleichen Höhenbereich relativ zur umgebenden Fläche liegen können. Die daraus resultierende Detektionsschwelle von Fehlern muß somit im allgemeinen höher als die Schrifthöhe angesetzt werden, um keine permanente Pseudofehlerdetektion durch konstruktive Strukturen zu provozieren.

Trotz des vorwiegenden Einsatzes dieser Methode besteht von Seiten der industriellen Anwender das Bedürfnis nach einem Prüfverfahren, das eine sichere Fehlerdetektion mit Höhenauslenkungen in der Größenordnung der konstruktiven Schrift- bzw. Markierungsstrukturen zuläßt.

Ein bekanntes Verfahren zur Vermessung von Oberflächenkonturen ist die optische Triangulometrie, welche auch als Lichtschnittverfahren bezeichnet wird. Hier wird ein eng begrenzter Lichtstrahl, im allgemeinen ein Laserstrahl, auf die zu vermessende Oberfläche gerichtet und die diffus reflektierte Strahlung optisch auf einem Sensor mit einer Anzahl von Bildelementen, d. h. Pixeln, abgebildet. Bleibt die Geometrie zwischen Kamera und Lichtstrahl unverändert, so kann aus einer Verschiebung des projizierten Lichtpunktes auf der Sensorfläche die Veränderung der räumlichen Lage des Lichtschnittpunkts auf dem zu vermessenden Objekt entlang des Strahls berechnet werden.

Eine solche Messung ist zunächst punktuell. Soll ein ganzer Bereich geprüft werden, so wird das Prüfobjekt unter der Triangulator-Meßanordnung hindurchbewegt, und die Meßwerte in schneller Form aufgezeichnet, so daß eine schmale kreisförmige Struktur auf der Reifenseitenfläche erfaßt wird.

Nachteilig an diesem Verfahren ist jedoch, daß es bisher nicht gelungen ist, mittels nachgeschalteter Datenverarbeitung eine Unterscheidung zwischen den Fehlerstrukturen, d. h. Beulen und Einschnürungen, und dem Schriftrelief zu erreichen. Fehlerstrukturen können bei diesem Verfahren erst ab Höhenwerten deutlich oberhalb der von Schrift detektiert werden, woraus sich abgesehen von der besseren Auflösung in radialer Richtung keine nennenswerten Vorteile gegenüber dem kapazitiven Verfahren ergeben.

Eine Weiterentwicklung des Lichtschnittverfahrens stellt die Abtastung der Oberfläche mit einem Fächerstrahl und einem Flächensensor dar. Der auf den Sensor projizierte Lichtstrich kann zur Ermittlung der Höheninformationen entlang der Meßlinie auf der gewölbten Oberfläche verwendet werden. Durch Bewegen des Objekts werden zeilenweise die Höheninformationen aufgezeichnet und anschließend zu einem vollständigen Datensatz zusammengesetzt. Der so erzeugte Datensatz enthält die Höheninformationen aus einem gesamten Oberflächenbereich einschließlich der Fehler und der Schrift- bzw. Markierungsstrukturen. Da allerdings Schrift- und Fehlerstrukturen im selben Höhenbereich liegen und diese Strukturen zudem auf einer im Verhältnis zu diesen Strukturen stark gekrümmten Oberfläche liegen, ist es auch mittels der so gewonnenen Daten noch nicht gelungen, durch eine Schwellwertentscheidung eine sichere Unterscheidung zwischen tatsächlichen Fehlerunebenheiten und der gewollten Strukturierung in Form von Schrift- und Markierung zu erreichen.

Die DE 44 42 980 C2 offenbart eine Vorrichtung und ein Verfahren zur berührungslosen Erfassung der Kontur einer gewölbten Oberfläche, wobei mit einer Einrichtung eine dreidimensionale Darstellung der Oberfläche erzeugt wird.

Die DE 43 04 451 A1 offenbart eine Vorrichtung und ein Verfahren zur berührungslosen Erfassung einer Unebenheit, wie z.B. einer Nahtstelle, in einer auch gewölbten Oberfläche, wie z.B. Gummilagen beim Aufbau von Reifen, wobei mit einer Einrichtung Schnittdarstellungen der Oberfläche erzeugt werden.

Die US 44 02 218 offenbart eine Vorrichtung und ein Verfahren zur Erfassung einer potentiell vorhandenen, im wesentlichen kantenfreien Unebenheit in einer gewölbten Oberfläche, wobei eine Einrichtung zur Erzeugung einer Darstellung der Oberfläche dient.

Die DE 39 31 132 A1 offenbart eine Vorrichtung und ein Verfahren zur Erfassung von Unebenheiten, wie z.B. einer Rauigkeit, einer gewölbten Oberfläche, wobei mit einer Ein- /richtung Daten für eine Darstellung der Oberfläche erzeugt werden, und wobei mit einer Einrichtung die Wölbung aus dieser Darstellung extrahiert wird.

Die DE 38 01 297 A1 offenbart ein Verfahren, mit dem Unebenheiten einer Oberfläche erfaßt und in digitalisierter Form als Darstellung der Oberfläche erzeugt werden, wobei ferner die kurzwelligen Strukturierungen durch entsprechende Dämpfung der zugehörigen harmonischen Anteile der Oberflächenkurve geglättet werden und eine Darstellung der Oberfläche erzeugt wird, die die langwelligen Unebenheiten aufweist, wobei die kurzwelligen geglättet sind.

Die Aufgabe der vorliegenden Erfindung besteht darin, eine Vorrichtung und ein Verfahren zum berührungslosen Erfassen einer im wesentlichen kantenfreien Unebenheit in einer gewölbten Oberfläche, die eine durch Kanten begrenzte Strukturierung aufweist, zu schaffen, die eine verbesserte Unterscheidung von fehlerhaften Unebenheiten und der kantenbegrenzten Strukturierung ermöglichen.

Diese Aufgabe wird durch eine Vorrichtung nach Anspruch 1 oder durch ein Verfahren nach Anspruch 11 gelöst.

Der vorliegenden Erfindung liegt die Erkenntnis zugrunde, daß die Unebenheit in einer gewölbten Oberfläche und die Strukturierung zwar die gleiche Höhe haben können, jedoch in ihrer Begrenzung deutlich unterschiedlich sind. Die Unebenheit, beispielsweise in Form einer Einschnürung oder einer Beule an einer Reifenseitenflanke, weist einen im wesentlichen kantenfreien, d. h. stetigen, Übergang zu der ungestörten gewölbten Oberfläche auf. Andererseits ist eine Strukturierung, die bewußt auf die gewölbte Oberfläche aufgebracht ist, dadurch charakterisiert, daß sie durch Kanten begrenzt ist, d. h. daß der Übergang von der gewölbten Oberfläche zu der Strukturierung abrupt und scharf begrenzt ist. Erfindungsgemäß werden daher nach einer dreidimensionalen Erfassung der gewölbten Oberfläche die spezifischen Unterschiede der beiden Formtypen ausgenutzt, um eine selektive Glättung der Strukturierung zu erreichen, bei der die zu detektierenden Unebenheiten nicht beeinflußt werden. Aufgrund der Tatsache, daß die zu detektierenden Unebenheiten auf der gewölbten Oberfläche lokal begrenzt sind, wird ferner die Wölbung der gewölbten Oberfläche extrahiert, ohne die Unebenheit oder die Strukturierung zu beeinflussen.

Damit wird eine wölbungslose Darstellung der gewölbten Oberfläche erhalten, die die zu erfassenden Unebenheiten und die Strukturierung aufweist, deren Kanten jedoch geglättet sind. Hier handelt es sich gewissermaßen um eine quasi-planare nachbearbeitete Darstellung der Reifenseitenflanke, die einer Schwellwertentscheidung unterzogen werden kann, um flächige Bereiche zu markieren, deren Höhe oberhalb bzw. unterhalb des Schwellenwerts liegen. Durch eine anschließende Beurteilung der Flächen der ermittelten Bereiche werden Unebenheiten von unter Umständen noch vorhandenen "Resten" der Strukturierung getrennt, wenn die Fläche der durch die Schwellwertentscheidung bestimmten Unebenheit größer als eine vorbestimmte Fläche ist.

Durch die Nachbearbeitung wird die durch Kanten begrenzte Strukturierung nicht gänzlich eliminiert, sondern es werden lediglich die Kanten geglättet, wobei aufgrund der Glättungsoperation auch die Höhe der Strukturierung beeinflußt wird. Somit wird der flächige Bereich, der von einer Strukturierung nach dem Schwellenwert verbleibt, durch die Datenverarbeitung stark verringert wenn nicht gänzlich unterdrückt, während die im wesentlichen kantenfreien Unebenheiten kaum oder gar nicht beeinflußt werden. Damit kann mittels einer Beurteilung der flächigen Bereiche nach der Schwellwertentscheidung bezüglich einer vorbestimmten Fläche mit hoher Sicherheit eine Unebenheit von einer Strukturierung unterschieden werden, unabhängig davon, ob die Höhe oder Ausdehnung der Strukturierung in der Nähe der Höhe und Ausdehnung der Beulen liegt.

Eine bevorzugte Anwendung des erfindungsgemäßen Konzepts bezieht sich auf die Qualitätskontrolle von Reifen, wobei die Reifenseitenflanken auf Beulen oder Einschnürungen untersucht werden. Eine Einschnürung, d. h. Vertiefung gegenüber der ungestörten gewölbten Oberfläche, kann immer angenommen werden, wenn ein flächiger Bereich unterhalb eines negativen Höhenschwellwerts erfaßt wird, da Reifen üblicherweise keine in die Reifenseitenflanke hineinreichenden Strukturierungen aufweisen.

Üblicherweise auf Reifen aufgebrachte Strukturierungen sind derart beschaffen, daß Buchstaben oder sonstige Angaben durch vorstehende Umrandungen mit relativ geringer Querschnittsabmessung dargestellt werden. Sofern diese Umrandungen durch die Glättung nicht bereits vollständig unterhalb des Schwellwerts gebracht werden, so werden sie bei der Beurteilung der Flächen der ermittelten Bereiche lediglich sehr kleine Flächen ergeben, wodurch eine einfache Unterscheidung zwischen der Strukturierung und den Beulen möglich wird, da Beulen üblicherweise eine relativ große Abmessung haben werden. Somit erlauben die erfindungsgemäße Vorrichtung und das erfindungsgemäße Verfahren eine automatische Qualitätskontrolle von Reifenseitenflanken, die in Echtzeit ausgeführt werden kann, wenn ausreichend schnelle Kameras zur Aufzeichnung des Reifens und eine ausreichend schnelle Bildverarbeitungsarchitektur eingesetzt werden.

Bevorzugte Ausführungsbeispiele der vorliegenden Erfindung werden nachfolgend bezugnehmend auf die beiliegenden Zeichnungen detaillierter erläutert. Es zeigen:
- Fig. 1: ein Prinzipdiagramm der erfindungsgemäßen Vorrichtung und des erfindungsgemäßen Verfahrens;
- Fig. 2: eine Ansicht von oben der Anordnung zum Aufzeichnen einer dreidimensionalen Darstellung der gewölbten Oberfläche;
- Fig. 3: eine Seitenansicht der Anordnung von Fig. 2;
- Fig. 4: eine detailliertere Darstellung der Einrichtung zum Erzeugen einer dreidimensionalen Darstellung der Oberfläche gemäß einem bevorzugten Ausführungsbeispiel;
- Fig. 5a: eine Höhenlinie, wie sie durch die Einrichtung von Fig. 4 erzeugt wird;
- Fig. 5b: eine Höhenlinie derwölbungslosen Darstellung; und
- Fig. 6: ein detailliertes Blockdiagramm für die erfindungsgemäße Vorrichtung bzw. für das erfindungsgemäße Verfahren.

Die Vorrichtung gemäß der vorliegenden Erfindung umfaßt eine Einrichtung 10 zum Erzeugen einer dreidimensionalen Darstellung der Oberfläche. Die dreidimensionale Darstellung der Oberfläche wird einer Einrichtung 20 zum Extrahieren der Wölbung aus der dreidimensionalen Darstellung der Oberfläche und zum Glätten der Kanten der Strukturierung, um eine wölbungslose Darstellung der gewölbten Oberfläche zu erhalten, zugeführt, welche die Unebenheit und die Strukturierung, deren Kanten nun geglättet sind, aufweist. Die wölbungslose Darstellung, die durch die Einrichtung 20 zum Extrahieren und zum Glätten erzeugt worden ist, wird einer Einrichtung 30 zum Vergleichen mit einem Schwellenwert zugeführt, um flächige Bereiche der wölbungslosen Darstellung zu ermitteln, die durch eine vorbestimmte Beziehung zu dem Schwellwert bestimmt sind. Bei einem bevorzugten Ausführungsbeispiel zum Überprüfen der Seitenflanke eines Reifens umfaßt der Schwellenwert einerseits einen positiven Schwellenwert, um Beulen zu ermitteln, und ebenfalls einen negativen Schwellwert, um Einschnürungen zu ermitteln. Die flächigen Bereiche, die durch die Einrichtung 30 zum Vergleichen ermittelt worden sind, können noch gewissermaßen "Reste" der Strukturierung umfassen. Die flächige Ausdehnung aufgrund der Strukturierung oberhalb des Schwellenwerts wird jedoch im allgemeinen deutlich kleiner als die flächige Ausdehnung der Beulen oberhalb des Schwellenwerts sein, derart, daß durch eine Flächenbeurteilung anhand des Flächenbetrags die Beulen von der Strukturierung getrennt werden können.

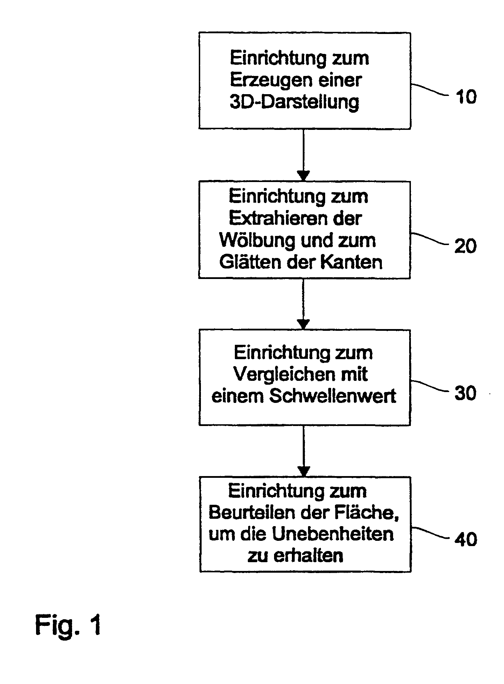

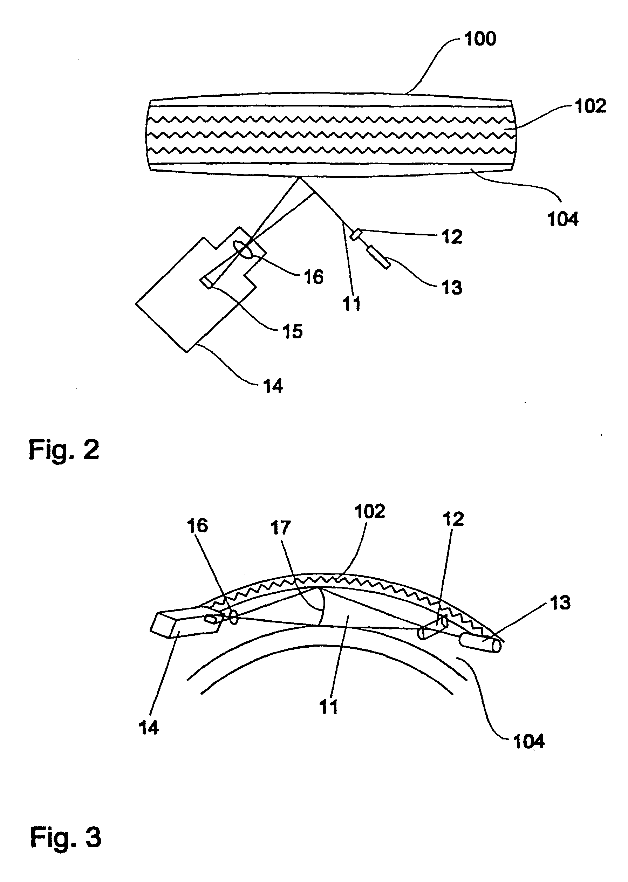

Bevor die in Fig. 1 gezeigte Vorrichtung zur berührungslosen Erfassung einer im wesentlichen kantenfreien Unebenheit in einer gewölbten Oberfläche detaillierter diskutiert wird, sei zunächst anhand der Fig. 3 bis 4 näher auf die Einrichtung 10 zum Erzeugen einer dreidimensionalen Darstellung eingegangen. Es sei darauf hingewiesen, daß im nachfolgenden zwar detailliert auf das triangulatorische Meßverfahren mittels optischer Geräte eingegangen wird, daß die vorliegende Erfindung jedoch nicht auf ein solches verfahren begrenzt ist. Prinzipiell bietet sich jede Einrichtung zum Erzeugen einer dreidimensionalen Darstellung der gewölbten Oberfläche, die berührungslos arbeitet, an.

In Fig. 2 ist gemäß einem bevorzugten Ausführungsbeispiel der vorliegenden Erfindung zur Qualitätskontrolle von Fahrzeugreifen ein Fahrzeugreifen 100 dargestellt, der sowohl eine Lauffläche 102 mit einem schematisch angedeuteten Profil als auch eine zu untersuchende Seitenflanke 104 aufweist, die allgemein eine gewölbte Oberfläche ist. Beim Ausführungsbeispiel der Reifenüberprüfung nimmt die allgemein gewölbte Oberfläche die Form eines Torus an.

Die zu untersuchende Seitenflanke 104 wird mittels eines Fächerstrahls 11 beleuchet, der durch eine Zylinderlinse 12 aus einem mittels eines Lasers 13 erzeugten Laserstrahls hergestellt wird. Der Fächerstrahl 11 wird an der Lauffläche 104 diffus reflektiert und mittels einer Kamera 14 aufgezeichnet, die einen Bildsensor 15 und eine Linse 16 umfaßt.

Fig. 3 zeigt eine Seitenansicht der in Fig. 2 von oben dargestellten Anordnung, wobei der Prüfbereich 17, der durch die Breite des Fächerstrahls 11 an der Seitenflanke 104 bestimmt ist, zu sehen ist.

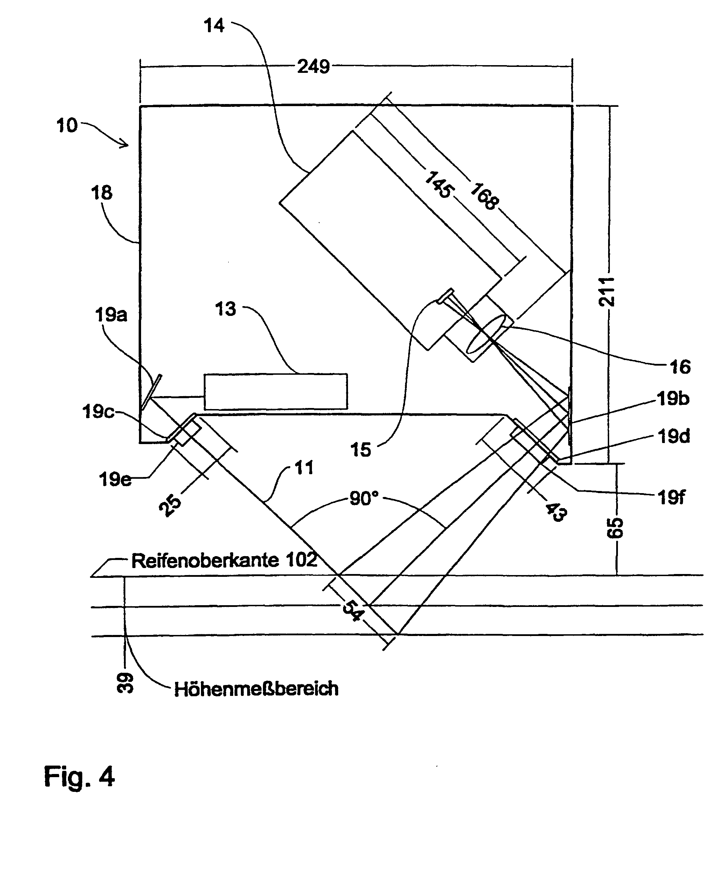

Fig. 4 zeigt eine detaillierte schematische Darstellung der Einrichtung 10 zum Erzeugen einer dreidimensionalen Darstellung der Oberfläche, die gemäß einem bevorzugten Ausführungsbeispiel der vorliegenden Erfindung als Scanner-Meßkopf ausgeführt ist. Die Ziffern in der Figur stellen Bemaßungen in nm für eine praktische Ausführung der Vorrichtung dar, um die Größenverhältnisse anzudeuten.

Zur Platzersparnis sind in einem Gehäuse 18 des Scanner-Meßkopfes ferner Spiegel 19a, 19b vorgesehen, wobei das Gehäuse 18 ferner Meßfenster 19c, 19d sowie Luftblenden 19e, 19f aufweist. Das Gehäuse ist staubdicht, wobei die Meßfenster 19c, 19d mittels Luftspülung von Staub freigehalten werden können. Der mit dem in Fig. 4 gezeigten Scanner-Meßkopf realisierbare Höhenmeßbereich liegt bei 39 mm. Die Höhenauflösung beträgt 76 µm (39 mm Höhe / 512 Graustufen der Kamera). Die Breite des Meßbereichs auf der Reifenflanke beträgt 80 mm. Die Höhenauflösung wird durch den Bildsensor bzw. die Grauempfindlichkeit der Kamera festgelegt.

Im nachfolgenden wird auf die Funktion der in den Fig. 2 bis 4 gezeigten Anordnung näher eingegangen. Bei dem triangulatorischen Prinzip wird zunächst der Lichtfächerstrahl 11, der durch einen Laser mit spezieller asphärischer Linsenoptik in Form beispielsweise der Zylinderlinse 12 erzeugt wird, auf die zu untersuchende Oberfläche gerichtet. Die diffus reflektierte Strahlung wird dann über das Linsensystem 16 auf die Sensorfläche 15 der Kamera projiziert. Aus der bekannten Geometrie der Meßanordnung wird dann, wie es für Fachleute bekannt ist, zusammen mit der Lage der projizierten Linie auf der Sensorfläche die Form der bestrahlten Oberfläche berechnet.

Die Geometrie der Anordnung von Lichtfächerstrahl 11 und Meßkamera 14 sowie die Pixelauflösung der Kamera bestimmen die räumliche Auflösung der Messung in lateraler und vertikaler Richtung. Die Geometrie wird dabei so gewählt, daß sowohl der zu untersuchende Reifenbereich 17 auf dem Sensor abgebildet wird, wie z. B. ein Meßbereich von 5 cm in radia-ler Richtung mit einer Auflösung von beispielsweise 0,5 mm, als auch gleichzeitig eine genügende Höhenauflösung von 76 µm erreicht wird, die im wesentlichen durch den Bildsensor 15 bestimmt ist. Somit ist eine hinreichende Darstellung der zu detektierenden Unebenheiten, die in einem Höhenbereich von mehr als 0,5 mm liegen, möglich.

Die Ortsauflösung der Messung in tangentialer Richtung, d. h. in Reifenumfangsrichtung, hängt von der Bildwiederholrate der Kamera ab. Die bei einem bevorzugten Ausführungsbeispiel der vorliegenden Erfindung benötigte tangentiale Ortsauflösung beträgt 1 mm. Ferner soll ein Reifen in der Praxis innerhalb einer Sekunde geprüft werden. Daraus ergibt sich bei einem angenommenen Durchmesser des Prüfbereichs von beispielsweise 0,6 m eine Meßrate von etwa 1900 Hz. Speziell für diese Prüfaufgabe geeignete Sensoren 15 werden beispielsweise von der Firma IVP (Typ MAPP 2200 PCI) gefertigt. Es sind jedoch ebenfalls andere Bildsensoren einsetzbar, die die genannten Spezifikationen erfüllen. Mittels einer auf dem Sensorchip integrierten programmierbaren Rechnerarchitektur wird eine spaltenweise Bestimmung der Höheninformationen durchgeführt, so daß pro aufgenommenem Sensorbild nur das Auswerteergebnis in Form einer Zeile, d. h. einer Höhen- bzw. Profillinie, auf den Meßrechner übermittelt werden muß.

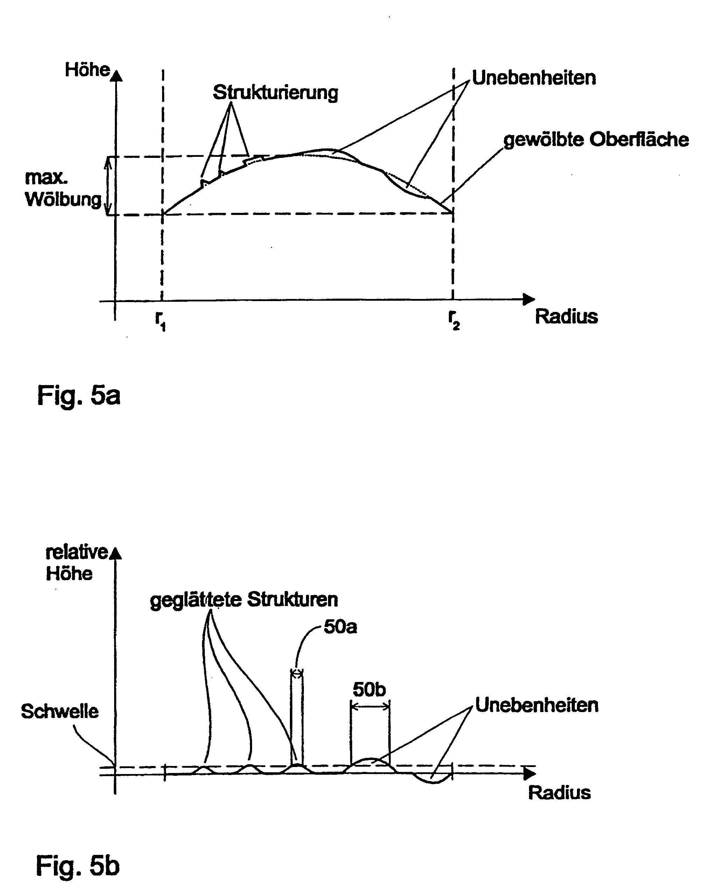

Eine solche Höhenlinie entlang des Prüfbereichs 17 ist beispielsweise in Fig. 5a schematisch dargestellt. Die x-Achse bezeichnet den Radius des Reifens, während die y-Achse die Höhe eines Punkts entlang des Radius bezüglich irgendeines Absolutwerts darstellt. Wie es auf Fig. 5a zu sehen ist, kann eine Strukturierung als dreieckige, rechteckige oder sonstwie geformte Erhöhung ausgeführt sein, die durch Kanten gegenüber der gewölbten Oberfläche begrenzt ist. Unebenheiten, wie z. B. Beulen oder Einschnürungen in einem Reifen, weisen dagegen einen stetigen Übergang zu der gewölbten Oberfläche auf, die im Bereich der Strukturierung und der Unebenheiten zur Veranschaulichung gepunktet eingezeichnet ist.

Es sei darauf hingewiesen, daß die in Fig. 5a gezeigte schematische Darstellung lediglich eine einzige Höhenlinie entlang des Prüfbereichs 17 (Fig. 3) zeigt. Wenn der Reifen 100 (Fig. 3) um seine Achse gedreht wird und die Kamera in entsprechenden Intervalle eine solche Höhenlinie erzeugt, entsteht nach einer vollständigen Umdrehung des Reifens 100 eine dreidimensionale Darstellung der Reifenseitenflanke. Erfindungsgemäß wird die dreidimensionale Höhendarstellung in ein digitales Datenverarbeitungssystem, das ein Personalcomputer mit Anzeige und Bedienfunktionen sein kann, eingespeist, auf dem eine Reihe von Bildverarbeitungsoperationen durchgeführt werden, um die im wesentlichen kantenfreie Unebenheit in der gewölbten Oberfläche, d. h. einen fehlerhaften Reifen, zu erhalten. Zu berücksichtigende Effekte sind die torusförmige Krümmung der Reifenseitenfläche und die mögliche Existenz von Seitenschlag des Reifens, der jedoch zu keiner Fehleranzeige führen darf, da ein Seitenschlag nicht zwangsweise zu einer Ausmusterung des Reifens führt.

Das digitale Datenverarbeitungssystem umfaßt zunächst die Einrichtung 20 zum Extrahieren der Wölbung und zum Glätten der Kanten, die eine wölbungslose Darstellung erzeugt, von der eine einzige Höhenlinie in Fig. 5b dargestellt ist. Es ist zu sehen, daß zum einen die Wölbung extrahiert ist, deren Maximalwert bis zu 4 cm annehmen kann. Weiterhin sind die Kanten der Strukturierung derart geglättet, daß dieselben in Fig. 5b lediglich als kleine Erhebungen verbleiben, während die Unebenheiten, die in der wölbungslosen Darstellung von Fig. 5b enthalten sind, im wesentlichen den Unebenheiten der gewölbten Darstellung von Fig. 5a entsprechen, da eine selektive Bildverarbeitung durchgeführt worden ist.

Die in Fig. 5b gezeigte wölbungslose Darstellung kann nun ohne weiteres mit einer ebenen Schwelle verglichen werden, um flächige Bereiche der wölbungslosen Darstellung zu ermitteln, die durch eine vorbestimmte Beziehung zu dem Schwellenwert bestimmt sind. Die Einrichtung 30 zum Vergleichen der wölbungslosen Darstellung, die in Fig. 5b schematisch dargestellt ist, wird zwei flächige Bereiche 50a, 50b liefern, wobei der erste flächige Bereich 50a von der Strukturierung stammt, während der zweite flächige Bereich 50b von der Beule stammt. Durch Glätten der Strukturierung wird der flächige Bereich 50a der Strukturierung oberhalb der Schwelle reduziert, während die Beule durch die selektive Datenverarbeitung, auf die später eingegangen wird, nicht beeinflußt wird. Damit können Beulen auch von Strukturierungen unterschieden werden, die ähnliche Ausdehnungen haben. Somit wird eine sichere Beulendetektion erreicht. In der Einrichtung 40 zum Beurteilen der Fläche der ermittelten Bereiche 50a und 50b wird dann automatisch bestimmt, daß der Bereich 50a von der Strukturierung stammt, während der Bereich 50b von einer Beule stammt. Dies kann durch einen Schwellenvergleich durchgeführt werden, wobei die Schwellenfläche kleiner als die zu erwartende Fläche von Beulen ist. Aus Fig. 5b ist ferner zu sehen, daß im Querschnitt relativ dünne Strukturierungen, wie sie zur Kennzeichnung größerer Buchstaben auf Reifenseitenflanken verwendet werden, durch die Kantenglättung bereits gänzlich unterdrückt werden und somit vollständig unter die Schwelle fallen. Handelt es sich jedoch um relativ hohe Strukturierungen, so werden sie stark gedämpft, und ihre flächigen Bereiche oberhalb der Schwelle werden wiederum stark reduziert, wodurch Beulen von Strukturierungen wie oben beschrieben einfach und sicher unterschieden werden können.

Im nachfolgenden wird detaillierter auf die Datenverarbeitung der dreidimensionalen Darstellung der Oberflächen eingegangen, um Unebenheiten in einer gewölbten Oberfläche zu erfassen. Aus Fig. 5a wird deutlich, daß sich die räumlichen Spektren der Strukturierung und der Unebenheiten dahingehend unterscheiden, daß das räumliche Spektrum der Strukturierung wesentlich höhere Spektralanteile aufweist als das Spektrum der Unebenheiten, da die scharfen Kanten für hohe Oberwellen im Spektrum der Strukturierung sorgen. Die im wesentlichen kantenlosen Unebenheiten dagegen haben ein räumliches Spektrum, dessen Energie eher im niedrigeren Bereich zu finden sein wird. Dasselbe trifft für das räumliche Spektrum der gewölbten Oberfläche zu. Dieses Spektrum hat aufgrund der im Vergleich zu den Unebenheiten langsamen Höhenänderung ein energiemäßig stark begrenztes Spektrum.

Das gesamte räumliche Spektrum der in Fig. 5a gezeigten Höhenlinie weist somit im wesentlichen drei Bereiche auf. Der Bereich mit den höchsten Ortsfrequenzen wird im wesentlichen allein durch die Strukturierung bestimmt. Ein mittlerer Bereich wird sowohl durch die Strukturierung als auch durch die Unebenheiten bestimmt, während sich die Wölbung der gewölbten Oberfläche lediglich in einem Spektralbereich bei sehr kleinen Ortsfrequenzen wiederfindet. Somit kann prinzipiell durch eine Bandpaßfilterung der in Fig. 5a gezeigten Höhenlinie eine selektive Glättung der Kanten der Strukturierung erreicht werden, ohne daß die Unebenheiten beeinflußt werden, und es kann ferner eine Extraktion der Wölbung der gewölbten Oberfläche erhalten werden, wenn die untere Grenzfrequenz des Durchlaßbereichs des Bandpaßfilters niedriger als die kleinste Frequenz der Unebenheiten gewählt wird, und wenn die obere Grenzfrequenz des Durchlaßbereichs höher als die höchste energiemäßig nennenswerte Frequenz der Unebenheiten gewählt wird. Durch eine derartige Filterung kann somit die Wölbung der gewölbten Oberfläche vollständig unterdrückt werden, während die Strukturierung lediglich geglättet wird und Reste derselben in der wölbungslosen Darstellung, die in Fig. 5b dargestellt ist, verbleiben. Da die Strukturierung im Querschnitt gesehen lediglich eine relativ kleine Abmessung entlang einer Höhenlinie hat, wird durch die Glättung der Kanten auch die Höhe der Strukturierung in der wölbungslosen Darstellung gegenüber der "wahrheitsgetreuen" Höhenlinie reduziert, was für die Unebenheiten jedoch nicht zutrifft. Damit wird erfindungsgemäß eine selektive Beeinflussung der Strukturierung erreicht.

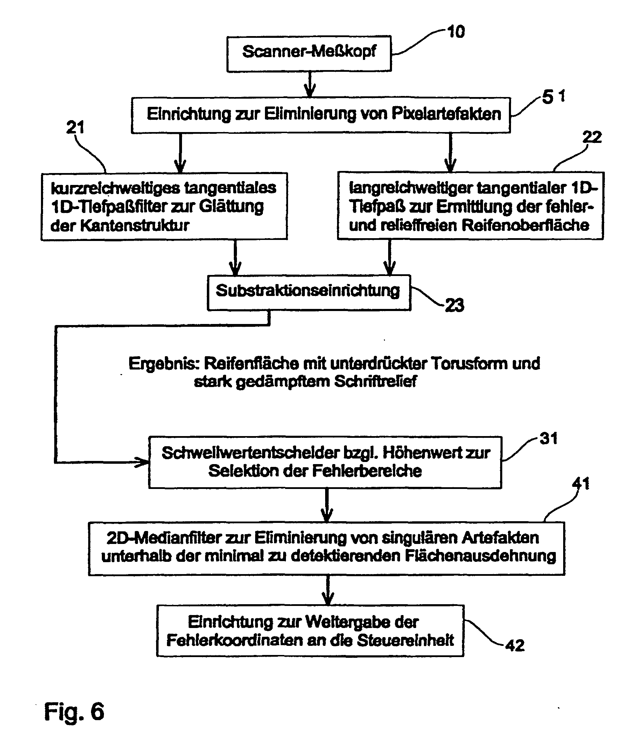

Fig. 6 zeigt ein detailliertes Blockschaltbild der erfindungsgemäßen vorrichtung 10 gemäß einem bevorzugten Ausführungsbeispiel der vorliegenden Erfindung zur industriellen Qualitätskontrolle von Reifen. Die in Fig. 6 gezeigte Vorrichtung umfaßt zunächst den Scanner-Meßkopf 10, der in Fig. 4 und in den Fig. 2 und 3 zu sehen ist. Vorzugsweise ist dem Scanner-Meßkopf 10, der die dreidimensionale Darstellung der Oberfläche erzeugt, eine Einrichtung 51 zur Eliminierung von Pixelartefakten nachgeschaltet, um gestörte Bildpunkte zu eliminieren, bei denen aus aufnahmetechnischen Gründen keine Höheninformationen ermittelt werden konnten bzw. bei denen Berechnungsfehler aufgetreten sind. Die Einrichtung 20 zum Extrahieren der Wölbung und zum Glätten der Kanten gliedert sich bei dem bevorzugten Ausführungsbeispiel der vorliegenden Erfindung in ein kurzreichweitiges tangetiales eindimensionales Tiefpaßfilter 21 zur Glättung der Kanten der Strukturierung, in ein langreichweitiges tangentiales eindimensionales Tiefpaßfilter 22 zur Ermittlung der fehler- und relieffreien Reifenoberfläche und eine Subtraktionseinrichtung 23 unter, um als Ergebnis eine wölbungslose Darstellung der Reifenfläche, in der die Torusform unterdrückt ist und das Schriftrelief stark gedämpft ist, zu erhalten. Durch das kurzreichweitige tangentiale eindimensionale Tiefpaßfilter 21, dessen Grenzfrequenz oberhalb des Spektrums der Unebenheiten liegt, werden die Kanten der Strukturierung geglättet. Durch das langreichweitige tangentiale eindimensionale Tiefpaßfilter 22 zur Ermittlung der fehler- und relieffreien Reifenoberfläche wird, da die Grenzfrequenz desselben unterhalb des Spektrums der Unebenheiten liegt, im wesentlichen lediglich die Wölbung der gewölbten Oberfläche erhalten. Durch die Subtraktionseinrichtung 23 wird schließlich das Ergebnis des Tiefpaßfilters 22 von dem Ergebnis des Tiefpaßfilters 21 subtrahiert, um das genannte Ergebnis zu erhalten.

Die Einrichtung 30 zum Vergleichen der wölbungslosen Darstellung mit einem Schwellenwert umfaßt einen Schwellenwertentscheider 31, der bezüglich eines Höhenwerts zur Selektion bzw. Ermittlung der flächigen Bereiche entscheidet. Dabei wird sowohl in positiver (zur Bestimmung der Beulen) als auch in negativer (zur Bestimmung der Einschnürungen) Höhenablenkung abhängig von einer vorbestimmten Detektionsuntergrenze für die Fehlerstrukturen selektiert. Es resultiert ein Bild mit als potentiell fehlerhaft markierten flächigen Bereichen.

Die Einrichtung 40 zum Beurteilen der Flächen der ermittelten flächigen Bereiche umfaßt vorzugsweise ein zweidimensionales Medianfilter 41 zur Eliminierung der flächigen Bereiche 50a (Fig. 5b) aufgrund der Strukturierung, derart, daß als Ausgangssignal im Sinne einer automatischen Echtzeitverarbeitung lediglich eine Darstellung der Seitenflanke des Reifens geliefert wird, in der fehlerhafte Bereiche aufgrund von im wesentlichen kantenfreien Unebenheiten markiert sind. Durch eine Einrichtung 42, die als Schnittstelle für ein Anzeigegerät bzw. für eine Steuereinheit ausgeführt sein kann, können die ermittelten Ergebnisse weitergegeben und beliebig verwendet werden.

Das tangentiale eindimensionale Tiefpaßfilter 21 zur Glättung der Kanten der Strukturierung ist vorzugsweise als lineares eindimensionales Tiefpaßfilter ausgeführt. Das langreichweitige tangentiale eindimensionale Tiefpaßfilter 22 zur Ermittlung der fehler- und relieffreien Reifenoberfläche ist vorzugsweise als nichtlineares eindimensionales Tiefpaßfilter in tangentialer Richtung ausgeführt. Die Reichweite, d. h. die Grenzfrequenz, des Filters ist derart dimensioniert, daß Beulen und Einschnürungen unterdrückt werden, daß der Seitenanschlag des Reifens, der sich als zusätzlich überlagerte niederfrequente Höhenänderung äußert, jedoch erhalten bleibt.

Das zweidimensionale Medianfilter 41 dient ferner zur Unterdrückung von singulären Artefakten unterhalb der minimal zu detektierenden Flächenausdehnung, welche neben den flächigen Bereichen aufgrund der Markierung auch Signale aufgrund von im wesentlichen singulären Gummiaustrieben auf der Reifenoberfläche oder auch Verarbeitungsfehler sein können. Die Größe des zweidimensionalen Medianfilters bestimmt somit die minimal zu detektierende Fehlerausdehnung.

## Patentansprüche

1. Vorrichtung zur berührungsgslosen Erfassung einer potentiell vorhandenen, im wesentlichen kantenfreien Unebenheit in einer gewölbten Oberfläche, die eine durch Kanten begrenzte Strukturierung aufweist, mit folgenden Merkmalen:
einer Einrichtung (10) zum Erzeugen einer dreidimensionalen Darstellung der Oberfläche;
einer Einrichtung (20) zum Extrahieren der Wölbung aus der dreidimensionalen Darstellung der Oberfläche und zum Glätten der Kanten der Strukturierung, um eine wölbungslose Darstellung der gewölbten Oberfläche zu erhalten, welche die potentielle vorhandene Unebenheit und die Strukturierung aufweist, deren Kanten nun geglättet sind;
einer Einrichtung (30) zum Vergleichen der wölbungslosen Darstellung mit einer Schwelle, um flächige Bereiche (50a, 50b) der wölbungslosen Darstellung zu ermitteln, die durch eine vorbestimmte Beziehung zu dem Schwellenwert bestimmt sind; und
einer Einrichtung (40) zum Beurteilen der Flächen der ermittelten Bereiche (50a, 50b), wobei ein Bereich (50b) als Unebenheit erfaßt wird, wenn seine Fläche größer als eine vorbestimmte Fläche ist.

2. Vorrichtung nach Anspruch 1, bei der die Einrichtung (20) zum Extrahieren und zum Glätten eine Bandpaßfiltereinrichtung aufweist, die eine obere und eine untere Grenzfrequenz hat, wobei die untere Grenzfrequenz derart eingestellt ist, daß die Wölbung unterdrückt wird, und wobei die obere Grenzfrequenz derart eingestellt ist, daß die Kanten geglättet werden, die Unebenheit jedoch im wesentlichen nicht beeinträchtigt wird.

3. vorrichtung nach Anspruch 1, bei der die Einrichtung (20) zum Extrahieren und zum Glätten folgende Merkmale aufweist:
ein erstes Tiefpaßfilter (21), dessen Grenzfrequenz derart eingestellt ist, daß die Kanten geglättet werden, die Unebenheit jedoch nicht beeinträchtigt wird;
ein zweites Tiefpaßfilter (22), dessen Grenzfrequenz derart eingestellt ist, daß die Wölbung unterdrückt wird; und
eine Subtraktionseinrichtung (23) zum Subtrahieren des Ausgangssignals des zweiten Tiefpaßfilters (22) von dem Ausgangssignal des ersten Tiefpaßfilters (21).

4. Vorrichtung nach einem der vorhergehenden Ansprüche, bei der die Einrichtung (20) zum Glätten ein nichtlineares Filter aufweist.

5. Vorrichtung nach einem der vorhergehenden Ansprüche, die ferner folgendes Merkmal aufweist:
eine Einrichtung (51) zum Entfernen von Pixelartefakten aus der dreidimensionalen Darstellung der Oberfläche, die der Einrichtung (10) zum Erzeugen nachgeschaltet ist.

6. Vorrichtung nach einem der vorhergehenden Ansprüche, bei der die Einrichtung (40) zum Beurteilen der Flächen eine Einrichtung (41) zum Eliminieren singulärer Artefakte aufweist.

7. Vorrichtung nach einem der vorhergehenden Ansprüche, bei der die Einrichtung zum Beurteilen ein zweidimensionales Medianfilter (41) aufweist, um nur die Bereiche nicht zu unterdrücken, die größer als die vorbestimmte Fläche sind, derart, daß ein Bild der Oberfläche erzeugt wird, in dem lediglich die Unebenheit markiert ist.

8. Vorrichtung nach einem der vorhergehenden Ansprüche, bei der die Einrichtung (10) zum Erzeugen folgende Merkmale aufweist:
einen Laser (13) mit vorgeschalteter Zylinderoptik (12), um einen Fächerstrahl (11) zum Belichten der gewölbten Oberfläche (17) zu erzeugen; und
eine Matrixkamera (14) zum Erfassen des diffus von der gewölbten Oberfläche reflektierten Fächerstrahls.

9. Vorrichtung nach Anspruch 8, bei der die gewölbte Oberfläche ein Reifen (100) ist, die im wesentlichen kantenfreie Unebenheit eine Beule oder Einschnürung an einer Seitenfläche (104) des Reifens ist, und die durch Kanten begrenzte Strukturierung eine auf der Seitenfläche (104) aufgebrachte Markierung ist, wobei der Laser (13) und die Matrixkamera (14) derart angeordnet sind, daß eine radiale Höhenlinie des Reifens (100) aufgezeichnet wird, wobei die Einrichtung (10) zum Erzeugen ferner folgende Merkmale aufweist:
eine Steuereinrichtung zum Steuern der Bildwiederholrate der Matrixkamera (14) und der Umdrehungsgeschwindigkeit des Reifens (100), um eine erwünschte Ortsauflösung in Reifenumfangsrichtung zu erhalten.

10. Vorrichtung nach Anspruch 9, bei der die Matrixkamera (14) angeordnet ist, um pro Aufnahme eine Höhenlinie der torusförmigen Seitenfläche (104) zu ermitteln, wobei die Einrichtung (10) zum Erzeugen folgendes Merkmal aufweist:
einen Matrixspeicher, in dem eine von der Matrixkamera erzeugte Höhenlinie nach der anderen eingespeist wird, um die dreidimensionale Darstellung der Reifenseitenfläche (104) zu ermitteln.

11. Verfahren zur berührungslosen Erfassung einer potentiell vorhandenen, im wesentlichen kantenfreien Unebenheit in einer gewölbten Oberfläche, die eine durch Kanten begrenzte Strukturierung aufweist, mit folgenden Schritten:
Erzeugen (10) einer dreidimensionalen Darstellung der Oberfläche;
Extrahieren (20) der Wölbung aus der dreidimensionalen Darstellung der Oberfläche und Glätten der Kanten der Strukturierung, um eine wölbungslose Darstellung der gewölbten Oberfläche zu erhalten, welche die potentiell vorhandene Unebenheit und die Strukturierung aufweist, deren Kanten nun geglättet sind;
Vergleichen (30) der wölbungslosen Darstellung mit einer Schwelle, um flächige Bereich (50a, 50b) der wölbungslosen Darstellung ermitteln, die durch eine vorbestimmte Beziehung zu dem Schwellenwert bestimmt sind; und
Beurteilen (40) der Flächen der ermittelten Bereiche (50a, 50b), wobei ein Bereich (50b) als Unebenheit erfaßt wird, wenn seine Fläche größer als eine vorbestimmte Fläche ist.

12. Verfahren nach Anspruch 11, das zur Qualitätskontrolle eines Reifens (100) eingesetzt wird, mit folgenden Schritten:
Erfassen einer Beule oder Einschnürung als potentiell vorhanden Unebenheit in der Seitenfläche (104) des Reifens (100) als gewölbte Oberfläche; und Aussondern des Reifens (100), wenn er eine Beule oder eine Einschnürung aufweist.

## Claims

1. A device for the contactless detection of a potentially existing essentially edge-free irregularity in a convex surface, which has a structuring that is delimited by edges, comprising:
a unit (10) for creating a three-dimensional representation of the surface;
a unit (20) for extracting the convexity from the three-dimensional representation of the surface and for smoothing the edges of the structuring so as to obtain a convex-free representation of the convex surface which exhibits the potentially existing irregularity and the structuring, whose edges have now been smoothed;
a unit (30) for comparing the convex-free representation with a threshold so as to identify areal regions (50a, 50b) of the convex-free representation which are determined by a predetermined relationship to the threshold value; and
a unit (40) for analyzing the areas of the identified regions (50a, 50b), a region (50b) being detected as an irregularity if its area exceeds a predetermined area.

2. A device according to claim 1, wherein the unit (20) for extracting and smoothing has a band-pass filter unit with an upper and a lower cut-off frequency, the lower cut-off frequency being so chosen that the convexity is suppressed and the upper cut-off frequency is so chosen that the edges are smoothed but the irregularity is scarcely affected.

3. A device according to claim 1, wherein the unit (20) for extracting and smoothing comprises:
a first low-pass filter (21), whose cut-off frequency is so chosen that the edges are smoothed but the irregularity is not affected.
a second low-pass filter (22), whose cut-off frequency is so chosen that the convexity is suppressed; and
a subtraction unit (23) for subtracting the output signal of the second low-pass filter (22) from the output signal of the first low-pass filter (21).

4. A device according to one of the preceding claims, wherein the unit (20) for smoothing has a non-linear filter.

5. A device according to one of the preceding claims, which also comprises:
a unit (51) for eliminating pixel artifacts from the three-dimensional representation of the surface, which follows the unit (10) for creating.

6. A device according to one of the preceding claims, wherein the unit (40) for analyzing the areas has a unit (41) for eliminating singular artifacts.

7. A device according to one of the preceding claims, wherein the unit for analyzing has a two-dimensional median filter (41) so as not to suppress just those regions which are greater than the predetermined area so that an image of the surface is created in which the irregularity alone is marked.

8. A device according to one of the preceding claims, wherein the unit (10) for creating comprises:
a laser (13) with precircuited cylinder optics (12) to generate a fan beam (11) for illuminating the convex surface (17); and
a matrix camera (14) for detecting the diffuse fan beam reflected from the convex surface.

9. A device according to claim 8, wherein the convex surface is a tire (100), the essentially edge-free irregularity is a bulge or a constriction on a sidewall (104) of the tire, and the edge-delimited structuring is a marking introduced on the sidewall (104), the laser (13) and the matrix camera (14) being so arranged that a radial height line of the tire (100) is recorded and the unit (10) for creating also comprises:
a control unit for controlling the image repetition rate of the matrix camera (14) and the speed of rotation of the tire (100) so as to obtain a desired spatial resolution in the tire circumference direction.

10. A device according to claim 9, wherein the matrix camera (14) is arranged to record a height line of the torus-shaped sidewall (104) in each photograph and the unit (10) for creating comprises:
a matrix memory in which the height lines generated by the matrix camera are stored one after the other so as to obtain the three-dimensional representation of the tire sidewall (104).

11. A method for the contactless detection of a potentially existing essentially edge-free irregularity in a convex surface, which has a structuring that is delimited by edges, comprising the following steps:
creating (10) a three-dimensional representation of the surface;
extracting (20) the convexity from the three-dimensional representation of the surface and smoothing the edges of the structuring so as to obtain a convex-free representation of the convex surface which exhibits the potentially existing irregularity and the structuring, whose edges have now been smoothed;
comparing (30) the convex-free representation with a threshold so as to identify areal regions (50a, 50b) of the convex-free representation which are determined by a predetermined relationship to the threshold value; and
analyzing (40) the areas of the identified regions (50a, 50b), a region (50b) being detected as an irregularity if its area exceeds a predetermined area.

12. A method according to claim 11, which is used for the quality control of a tire (100), comprising the following steps:
detecting a bulge or constriction as a potentially existing irregularity on the sidewall (104) of the tire (100) as a convex surface; and
rejecting the tire (100) if it has a bulge or a constriction.

## Revendications

1. Dispositif de détection sans contact d'une irrégularité substantiellement sans bords potentiellement présente dans une surface bombée présentant une structuration délimitée par des bords, aux caractéristiques suivantes :
un dispositif (10) destiné à générer une représentation tridimensionnelle de la surface ;
un dispositif (20) destiné à extraire le bombage de la représentation tridimensionnelle de la surface et à aplanir les bords de la structuration, pour obtenir une représentation sans bombage de la surface bombée présentant l'irrégularité potentiellement présente et la structuration dont les bords sont maintenant aplanis ;
un dispositif (30) destiné à comparer la représentation sans bombage avec un seuil, pour déterminer les zones planes (50a, 50b) de la représentation sans bombage qui sont déterminées par un rapport prédéterminé à la valeur de seuil ; et
un dispositif (40) destiné à apprécier les surfaces des zones déterminées (50a, 50b), une zone (50b) étant saisie comme irrégularité lorsque sa surface est plus grande qu'une surface prédéterminée.

2. Dispositif selon la revendications 1, dans lequel le dispositif (20) destiné à extraire et à aplanir présente un dispositif de filtre passe-bande qui a une fréquence limite supérieure et inférieure, la fréquence limite inférieure étant réglée de sorte que le bombage soit supprimé et la fréquence limite supérieure étant réglée de sorte que les bords soient aplanis, mais que l'irrégularité ne soit toutefois sensiblement pas altérée.

3. Dispositif selon la revendication 1, dans lequel le dispositif (20) destiné à extraire et à aplanir présente les caractéristiques suivantes :
un premier filtre passe-bas (21) dont la fréquence limite est réglée de sorte que les bords soient aplanis, mais que l'irrégularité ne soit toutefois pas altérée ;
un deuxième filtre passe-bas (22) dont la fréquence limite est réglée de sorte que le bombage soit supprimé ; et
un dispositif de soustraction (23) destiné à soustraire le signal de sortie du deuxième filtre passe-bas (22) du signal de sortie du premier filtre passe-bas (21).

4. Dispositif selon l'une des revendications précédentes, dans lequel le dispositif (20) destiné à aplanir présente un filtre non linéaire.

5. Dispositif selon l'une des revendications précédentes, présentant, par ailleurs, la caractéristique suivante :
un dispositif (51) destiné à éliminer des artifices de pixels de la représentation tridimensionnelle de la surface, lequel est connecté après le dispositif (10) destiné à générer.

6. Dispositif selon l'une des revendications précédentes, dans lequel le dispositif (40) destiné à apprécier les surfaces présente un dispositif (41) destiné à éliminer les artifices singuliers.

7. Dispositif selon l'une des revendications précédentes, dans lequel le dispositif destiné à apprécier présente un filtre moyen bidimensionnel (41), pour ne pas supprimer uniquement les zones qui sont plus grandes que la surface prédéterminée, de sorte que soit générée une image de la surface dans laquelle seule l'irrégularité est marquée.

8. Dispositif selon l'une des revendications précédentes, dans lequel le dispositif (10) destiné à générer présente les caractéristiques suivantes :
un laser (13) à optique cylindrique (12) connectée en amont, destiné à générer un rayon en éventail (11) pour illuminer la surface bombée (17) ; et
une caméra matricielle (14) destinée à saisir le rayon en éventail réfléchi de manière diffuse par la surface bombée.

9. Dispositif selon la revendication 8, dans lequel la surface bombée est un pneu (100), l'irrégularité substantiellement sans bords est une bosse ou constriction sur une face latérale (104) du pneu et la structuration délimitée par des bords est un marquage appliqué sur la face latérale (104), le laser (13) et la caméra matricielle (14) étant disposés de sorte que soit enregistrée une ligne de hauteur radiale du pneu (100), le dispositif (10) destiné à générer présentant, par ailleurs, les caractéristiques suivantes :
un dispositif de commande destiné à régler le taux de répétition d'image de la caméra matricielle (14) et la vitesse de rotation du pneu (100), pour obtenir une résolution locale désirée dans le sens périphérique du pneu.

10. Dispositif selon la revendication 9, dans lequel la caméra matricielle (14) est disposée de manière à déterminer, par prise de vue, une ligne de hauteur de la face latérale torique (104), le dispositif (10) destiné à générer présentant la caractéristique suivante :
une mémoire à matrice, dans laquelle sont introduites l'une après l'autre les lignes de hauteur générées par la caméra matricielle, pour déterminer la représentation tridimensionnelle de la face latérale du pneu (104).

11. Procédé de détection sans contact d'une irrégularité substantiellement sans bords potentiellement présente dans une surface bombée présentant une structuration délimitée par des bords, aux étapes suivantes consistant à :
générer (10) une représentation tridimensionnelle de la surface ;
extraire (20) le bombage de la représentation tridimensionnelle de la surface et aplanir les bords de la structuration, pour obtenir une représentation sans bombage de la surface bombée présentant l'irrégularité potentiellement présente et la structuration dont les bords sont maintenant aplanis ;
comparer (30) la représentation sans bombage avec un seuil, pour déterminer les zones planes (50a, 50b) de la représentation sans bombage qui sont déterminées par un rapport prédéterminé à la valeur de seuil ; et
apprécier (40) les surfaces des zones déterminées (50a, 50b), une zone (50b) étant saisie comme irrégularité lorsque sa surface est plus grande qu'une surface prédéterminée.

12. Procédé selon la revendication 11 utilisée pour le contrôle de qualité d'un pneu (100), aux étapes suivantes consistant à :
saisir une bosse ou constriction comme irrégularité potentiellement présente dans la face latérale (104) du pneu (100) comme surface bombée ; et
éliminer le pneu (100) lorsqu'il présente une bosse ou une constriction.
